# EUROPÄISCHE PATENTSCHRIFT

(11) **EP 1 944 577 B1**
(45) Veröffentlichungstag und Bekanntmachung des Hinweises auf die Patenterteilung: **13.03.2013**
(21) Anmeldenummer: 08100110.9
(22) Anmeldetag: 04.01.2008
(51) Int. Cl.: G01C 21/34, G08G 1/09

(54) **Verfahren und vorrichtung zum navigieren eines fahrzeugs**
Method and device for navigating an automobile
Procédé et dispositif destinés à la navigation d'un véhicule

(30) Priorität: 12.01.2007 DE 102007001857
(43) Veröffentlichungstag der Anmeldung: 16.07.2008
(73) Patentinhaber: Continental Automotive GmbH, 30165 Hannover (DE)
(72) Erfinder: Kamalski, Theodor, 6006, NC Weert (NL)

(56) Entgegenhaltungen:
- EP-A1- 1 640 936
- EP-A2- 0 994 448
- DE-C1- 4 445 582

## Beschreibung

Die Erfindung betrifft ein Verfahren zum Verwenden von verkehrsrelevanten Nachrichten in einer Fahrzeugnavigation nach dem Oberbegriff des Anspruchs 1 und eine vorrichtung zum Navigieren eines Fahrzeugs nach dem Oberbegriff des Anspruchs 3. Über einen Verkehrsnachrichtenkanal werden verkehrsrelevante Nachrichten übertragen und durch eine Empfangseinheit in dem Fahrzeug empfangen. Die empfangenen verkehrsrelevanten Nachrichten können dazu benutzt werden, das Fahrzeug auf einer geeigneten Route zu einem vorgegebenen Ziel zu navigieren.

Ein Datenübertragungssystem überträgt die verkehrsrelevanten Nachrichten gemäß einem vorgegebenen Übertragungsprotokoll. Das Datenübertragungssystem ist beispielsweise ein Radiodatensystem, kurz: RDS, oder basiert auf Digital Audio Broadcasting, kurz: DAB, Digital Multimedia Broadcasting, kurz: DMB, Transport Protocol Experts Group, kurz: TPEG, oder Satellite Digital Audio Radio Services, kurz: SDARS. Der Verkehrsnachrichtenkanal ist beispielsweise als Traffic Message Channel, kurz: TMC, bekannt. Die verkehrsrelevanten Nachrichten können alternativ oder zusätzlich zu einem Audio- oder Mult-mediaprogramm mittels des Datenübertragungssystems übertragen werden.

Beispielsweise mittels des Radiodatensystems kann ein Radiosender über eine terrestrische Sendeanlage zusätzlich zu einem Radioprogramm des Radiosenders Daten und insbesondere die verkehrsrelevanten Nachrichten senden. Im Gegensatz zu dem Radioprogramm werden die gesendeten Daten von der Empfangseinheit und/oder von einer mit der Empfangseinheit gekoppelten Einheit, zum Beispiel einem Radio, nicht in hörbare Audiosignale umgewandelt. Die Daten werden vorzugsweise in digitaler Form übertragen und umfassen beispielsweise Informationen über den Radiosender, Informationen über die aktuelle Frequenz oder Alternativfrequenzen, auf der das aktuelle Radioprogramm gesendet wird, eine Art des aktuell ausgestrahlten Radioprogramms und aktuelle Verkehrs- und/oder Reiseinformationen und/oder andere Nachrichten.

Für den Verkehrsnachrichtenkanal entsprechend TMC für RDS ist vorgesehen, dass von den Radiosendern jeweils maximal 300 aktuelle Nachrichten ausgestrahlt werden. Entsprechend sind die Empfangseinheiten ausgebildet, 300 Verkehrsnachrichten zu verarbeiten und zu speichern. Eine solche Beschränkung der maximalen Anzahl an aktuellen verkehrsrelevanten Nachrichten ist jedoch bei SDARS nicht vorgesehen. Dies kann dazu führten, dass nicht alle aktuell ausgestrahlten verkehrsrelevanten Nachrichten in dem Nachrichtenspeicher der jeweiligen Empfangseinheit gespeichert werden können. Dadurch kann das Navigieren des Fahrzeugs basierend auf den empfangenen verkehrsrelevanten Nachrichten beeinträchtigt sein.

Aus der DE 44 45 582 C1 ist es bekannt, nur solche empfangenen verkehrsrelevanten Nachrichten in einer Verkehrsdurchsage anzugeben, die in einem von der Fahrzeugposition abhängigen Meldebereich liegen. Aus der EP 1 64C 936 A1 ist es bekannt, empfangene verkehrsrelevante Nachrichten geographisch zu filtern und nur solche Nachrichten abzuspeichern, die innerhalb eines Grenzbereichs und eines Richtungswertes liegen.

Die Aufhabe der Erfindung ist, ein Verfahren und eine Vorrichtung zu schaffen, das beziehungsweise die ein zuverlässiges Navigieren eines Fahrzeugs ermöglicht und die bekannten Verfahren und Vorrichtungen weiter optimiert.

Die Aufgabe wird gelöst durch die Merkmale der unabhängigen Patentansprüche. Vorteilhafte Weiterbildungen der Erfindung sind in den Unteransprüche gekenntzeichnet.

Die Erfindung zeichnet sich aus durch ein Verfahren und eine entsprechende Vorrichtung zum Navigieren eines Fahrzeugs. Mindestens eine verkehrsrelevante Nachricht wird empfangen. Die mindestens eine verkehrsrelevante Nachricht wird überprüft, ob diese mindestens eine vorgegebene Bedingung erfüllt. Die mindestens eine vorgegebene Bedingung ist erfüllt, wenn die jeweilige verkehrsrelevante Nachricht ein vorgegebenes geographisches Gebiet betrifft, das abhängig von einer aktuellen Position des Fahrzeugs vorgegeben ist, und/oder eine aktuell vorgegebene Route betrifft. Die jeweilige verkehrsrelevante Nachricht wird ferner nur dann in einem Nachrichtenspeicher gespeichert, wenn für diese die mindestens eine vorgegebene Bedingung erfüllt ist. Andernfalls wird die jeweilige verkehrsrelevante Nachricht verworfen. Das Fahrzeug wird navigiert abhängig von den verkehrsrelevanten Nachrichten, die in dem Nachrichtenspeicher gespeichert sind.

Die verkehrsrelevanten Nachrichten betreffen inhaltlich Begebenheiten, die geeignet sind, den Verkehr zu beeinflussen und/oder die Verkehrssicherheit zu erhöhen oder zu gewährleisten und/oder ein zügiges Vorankommen, das heißt kurze Fahrzeiten, zu ermöglichen. Dazu gehören beispielsweise Verkehrsinformationen, Reiseinformationen oder Wetterinformationen. Insbesondere betreffen verkehrsrelevante Nachrichten Straßensperrungen, Umleitungen oder Staus zum Beispiel aufgrund von Bauarbeiten, Unfällen, Überschwemmungen, Glatteis oder starkem Verkehrsaufkommen. Ferner können verkehrsrelevante Nachrichten Wetterinformationen wie zum Beispiel Frostwarnungen, Glatteiswarnungen, Warnungen vor starken Schneefällen, Sturmwarnungen, Warnungen vor starken Regenfällen, Hinweise auf Überschwemmungen oder Nebelwarnungen umfassen. Ferner können auch Informationen zu einer Parkplatzsituation verkehrsrelevant sein. Auch durch Hinweise auf verfügbare Parkplätze kann Verkehr verringert oder gesteuert werden, der der Parkplatzsuche dient.

Das Navigieren umfasst beispielsweise, einem Fahrer des Fahrzeugs optische oder akustische Fahranweisungen zu geben, um das Fahrzeug zu dem vorgegebenen Ziel zu führen. Ferner kann das Navigieren auch ein Anpassen der aktuell vorgegebenen Route oder ein Ermitteln einer alternativen Route abhängig von den Nachrichten umfassen, die in dem Nachrichtenspeicher gespeichert sind. Ferner kann der Fahrer auch abhängig von den Nachrichten, die in dem Nachrichtenspeicher gespeichert sind, über mögliche Verkehrshindernisse informiert werden und dem Fahrer kann gegebenenfalls eine Änderung der aktuell vorgegebenen Route oder eine alternative Route vorgeschlagen werden.

Durch das Speichern nur derjenigen verkehrsrelevanten Nachrichten, die für das Navigieren zu einem vorgegebenen Ziel relevant sind, das heißt die die aktuell vorgegebene Route betreffen oder die dasjenige geographische Gebiet betreffen, in dem sich das Fahrzeug aktuell befindet, kann sichergestellt werden, dass diese verkehrsrelevanten Nachrichten in dem Nachrichtenspeicher für das Navigieren bereitstehen und nicht durch andere Nachrichten verdrängt werden, die andere geographische Gebiete betreffen, die aktuell irrelevant sind für das Navigieren zu dem vorgegebenen Ziel. Dies ist insbesondere dann vorteilhaft, wenn eine große Anzahl von aktuellen verkehrsrelevanten Nachrichten empfangen werden, zum Beispiel mehr als 300. Ein Speicherüberlauf des Nachrichtenspeichers kann durch Auswahl der aktuell für das Navigieren zu dem vorgegebenen Ziel relevanten Nachrichten verhindert werden. Besonders vorteilhaft ist dies insbesondere dann, wenn die verkehrsrelevanten Nachrichten von einem Satelliten gesendet werden, zum Beispiel entsprechend SDARS. Ein solcher Satellit versorgt gegebenenfalls ein sehr großes geographisches Gebiet, so dass die Anzahl an aktuellen verkehrsrelevanten Nachrichten sehr groß sein kann, insbesondere größer als 300. Die Anzahl an aktuellen verkehrsrelevanten Nachrichten ist nicht beschränkt und kann insbesondere in Zukunft gegenüber dem heutigen Stand zunehmen. Durch Vorsehen der Auswahl der zu speichernden aktuellen verkehrsrelevanten Nachrichten als Gegenmaßnahme kann einer Verschlechterung der Navigation entgegengewirkt werden. Auch bei der großen Anzahl an aktuellen verkehrsrelevanten Nachrichten ist so das Navigieren zuverlässig möglich.

Eine Ausdehnung und gegebenenfalls eine Form und/oder Ausrichtung des vorgegebenen geographischen Gebiets kann ferner abhängig von der aktuellen Position und/oder einer Fahrtrichtung des Fahrzeugs und/oder der aktuell vorgegeben Route und/oder einer aktuellen Routenempfehlung und/oder alternativen Routen zu dem vorgegebenen Ziel vorgegeben werden. Dies hat den Vorteil, dass auf diese Weise alle Straßen, die für das Navigieren zu dem vorgegebenen Ziel relevant sind oder relevant werden können, von dem vorgegebenen geographischen Gebiet GEO erfasst sind.

Erfindungsgemäß wird die Ausdehnung des vorgegebenen geographischen Gebiets vorgegeben abhängig von einer Anzahl an verkehrsrelevanten Nachrichten, die in dem Nachrichtenspeicher gespeichert sind. Dies hat den Vorteil, dass die Ausdehnung des vorgegebenen geographischen Gebiets dynamisch anpassbar ist. Je größer die Anzahl an verkehrsrelevanten Nachrichten ist, desto kleiner wird vorzugsweise die Ausdehnung des vorgegebenen geographischen Gebiets vorgegeben. Entsprechend wird vorzugsweise das vorgegebene geographische Gebiet desto größer gewählt, je kleiner die Anzahl an verkehrsrelevanten Nachrichten ist. Dadurch kann der Nachrichtenspeicher gut ausgenutzt werden.

Erfindungsgemäß wird die Ausdehnung des vorgegebenen geographischen Gebiets verkleinert, wenn die Anzahl an verkehrsrelevanten Nachrichten, die in dem Nachrichtenspeicher gespeichert sind, einen vorgegebenen Schwellenwert überschreitet. Ferner werden verkehrsrelevante Nachrichten verworfen, die ein geographisches Gebiet außerhalb des vorgegebenen geographischen Gebiets betreffen. Der Vorteil ist, dass der Nachrichtenspeicher nicht durch nicht oder nur wenig relevante Nachrichten blockiert wird, sondern dass der Nachrichtenspeicher für die wichtigen und relevanten Nachrichten zur Verfügung steht, die für das Navigieren zu dem vorgegebenen Ziel erforderlich sind. Der Nachrichtenspeicher kann dadurch besonders gut ausgenutzt werden.

In einer weiteren vorteilhaften Ausgestaltung werden oder bleiben verkehrsrelevante Nachrichten, die die aktuell vorgegebene Route betreffen, in dem Nachrichtenspeicher gespeichert, wenn diese von strategischer Bedeutung für das Navigieren sind. Von strategischer Bedeutung für das Navigieren sind verkehrsrelevante Nachrichten zum Beispiel dann, wenn die aktuell vorgegebene Route nicht oder nur eingeschränkt befahrbar ist und mit hoher Wahrscheinlichkeit das Befahren einer alternativen Route erforderlich ist, um das vorgegebene Ziel erreichen zu können. Solche verkehrsrelevante Nachrichten betreffen beispielsweise Straßensperren, gesperrte Grenzübergänge, unpassierbare Straßen aufgrund von Bauarbeiten, Überschwemmungen, Schnee oder Glatteis oder einem schweren Unfall. Es können jedoch auch verkehrsrelevante Nachrichten anderen Inhalts von strategischer Bedeutung für das Navigieren des Fahrzeugs zu dem vorgegebenen Ziel sein. Der Vorteil ist, dass Änderungen der aktuell vorgegebenen Route frühzeitig vorgenommen werden können, insbesondere auch dann, wenn das Verkehrshindernis mit strategischer Bedeutung außerhalb des vorgegebenen geographischen Gebiets, jedoch auf der bislang aktuell vorgegebenen Route liegt. Das Verkehrshindernis kann dann gegebenenfalls weiträumig umfahren werden. Durch frühzeitiges Ändern der aktuell vorgegebenen Route stehen gegebenenfalls mehr Freiheitsgrade zur Verfügung für das Ermitteln der alternativen Route. Das Navigieren kann so besonders zuverlässig erfolgen.

Ausführungsbeispiele der Erfindung sind im Folgenden anhand der schematischen Zeichnungen erläutert. Es zeigen:
- Figur 1: ein Fahrzeug, einen Satelliten und eine terrestrische Sendeanlage,
- Figur 2: einen Straßenplan und
- Figur 3: ein Ablaufdiagramm.

Elemente gleicher Konstruktion oder Funktion sind figurenübergreifend mit den gleichen Bezugszeichen versehen.

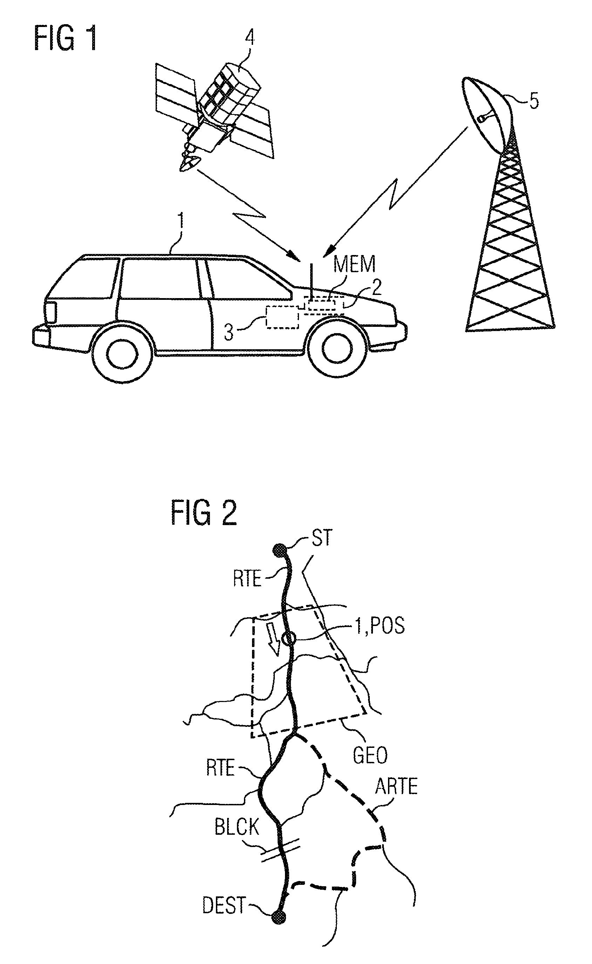

Ein Fahrzeug 1 umfasst eine Empfangseinheit 2 und eine Navigationseinheit 3 (Figur 1). Die Empfangseinheit 2 und die Navigationseinheit 3 sind miteinander gekoppelt. Die Empfangseinheit 2 und die Navigationseinheit 3 können jedoch auch in einer gemeinsamen Einheit ausgebildet sein.

Die Empfangseinheit 2 ist ausgebildet, Daten von einem Satelliten 4 und/oder von einer terrestrischen Sendeanlage 5 zu empfangen. Der Satellit 4 ist beispielsweise ausgebildet, Daten und ein Radioprogramm entsprechend Satellite Digital Audio Radio Services, kurz: SDARS, auszusenden. Der Satellit 4 kann jedoch auch anders ausgebildet sein. Die terrestrische Sendeanlage 5 ist beispielsweise ausgebildet, Daten und ein Radioprogramm entsprechend Radio Data System, kurz: RDS, Digital Audio Broadcasting, kurz: DAB, Digital Multimedia Broadcasting, kurz: DMB, oder Transport Protocol Experts Group, kurz: TPEG, auszusenden. Die terrestrische Sendeanlage 5 kann jedoch auch anders ausgebildet sein.

Die Daten, die von dem Satelliten 4 und/oder von der terrestrischen Sendeanlage 5 gesendet werden, umfassen beispielsweise einen Verkehrsnachrichtenkanal, zum Beispiel entsprechend Traffic Message Channel, kurz: TMC. Die Daten umfassen verkehrsrelevante Nachrichten MSG mit aktuellen Verkehrs- und/oder Reiseinformationen und/oder Wetterinformationen. Verkehrsrelevante Nachrichten betreffen beispielsweise Straßensperrungen oder Umleitungen oder Staus aufgrund von Bauarbeiten, Unfällen, Überschwemmungen oder Glatteis. Ferner können verkehrsrelevante Nachrichten MSG auch Wetterinformationen wie zum Beispiel Frostwarnungen, Glatteiswarnungen, Schneewarnungen, Sturmwarnungen, Warnungen vor starken Regenfällen oder Hinweise auf Überschwemmungen oder Nebel betreffen. Ferner können verkehrsrelevante Nachrichten MSG auch Informationen zu einer Parkplatzsituation umfassen, das heißt zum Beispiel die Verfügbarkeit von freien Parkplätzen in einer Stadt. Ferner können verkehrsrelevante Nachrichten MSG auch weitere oder andere Nachrichten umfassen, die geeignet sind, den Verkehrfluss zu steuern, Verkehr zu vermeiden und/oder die Sicherheit der Verkehrsteilnehmer zu erhöhen.

Zu jeder Zeit ist jeweils eine Anzahl von verkehrsrelevanten Nachrichten MSG aktuell. Eine Spanne für die Anzahl an aktuellen verkehrsrelevanten Nachrichten reicht von keiner verkehrsrelevanten Nachricht MSG bis zu mehreren hundert oder mehr als tausend verkehrsrelevanten Nachrichten MSG. Die Empfangseinheit 2 und/oder die Navigationseinheit 3 umfassen einen Nachrichtenspeicher MEM, in dem eine vorgegebene maximale Anzahl von verkehrsrelevanten Nachrichten MSG speicherbar ist. Jedoch werden gegebenenfalls mehr aktuelle verkehrsrelevante Nachrichten MSG durch den Satelliten 4 und/oder die terrestrische Sendeanlage 5 ausgesendet und von der Empfangseinheit 2 empfangen als Speicherplatz in dem Nachrichtenspeicher MEM zur Verfügung steht. Es ist daher gegebenenfalls nur ein Teil der insgesamt empfangenen aktuellen verkehrsrelevanten Nachrichten MSG in dem Nachrichtenspeicher MEM speicherbar.

Figur 2 zeigt einen Straßenplan mit Straßen, wie er beispielsweise der Navigationseinheit 3 für das Navigieren des Fahrzeugs 1 zur Verfügung steht. Verkehrsrelevante Nachrichten MSG sind beispielsweise über eine Straßenkennung mit Straßen des Straßenplans oder mit einem geographischen Gebiet, zum Beispiel einer Stadt, verknüpft. Die Navigationseinheit 3 ermittelt eine aktuelle vorgegebene Route RTE ausgehend von einem vorgegebenen Start ST bis hin zu einem vorgegebenen Ziel DEST. Die aktuell vorgegebene Route RTE ist in Figur 2 als dicke, durchgezogene Linie dargestellt. Nicht auf der aktuell vorgegebenen Route RTE liegende Straßen sind als dünne, durchgezogene Linien dargestellt. Die Navigationseinheit 3 ist ausgebildet, eine aktuelle Position POS des Fahrzeugs 1 zu ermitteln, zum Beispiel mittels Global Positioning System, kurz: GPS.

Das Navigieren NAV des Fahrzeugs 1 erfolgt bevorzugt unter Berücksichtigung der empfangenen verkehrsrelevanten Nachrichten MSG, die in dem Nachrichtenspeicher MEM gespeichert sind. Dadurch ist ein dynamisches Navigieren möglich, das heißt abhängig von den aktuell in dem Nachrichtenspeicher MEM gespeicherten verkehrsrelevanten Nachrichten MSG kann die aktuell vorgegebene Route RTE automatisch oder unter Einbeziehung des Fahrers des Fahrzeugs 1 geändert und einer jeweiligen aktuellen Verkehrssituation angepasst werden. Um alle für das Navigieren NAV hin zu dem aktuell vorgegebenen Ziel DEST erforderlichen verkehrsrelevanten Nachrichten MSG in dem Nachrichtenspeicher MEM speichern zu können, werden nur diejenigen verkehrsrelevanten Nachrichten MSG in dem Nachrichtenspeicher MEM gespeichert, die mindestens eine vorgegebene Bedingung erfüllen. Eine solche vorgegebene Bedingung kann umfassen, dass die jeweilige verkehrsrelevante Nachricht MSG die aktuell vorgegebene Route RTE betreffen muss. Insbesondere werden alle diejenigen verkehrsrelevanten Nachrichten MSG in dem Nachrichtenspeicher MEM gespeichert, die die aktuell vorgegebene Route RTE betreffen und die von strategischer Bedeutung für das Navigieren NAV sind. Eine verkehrsrelevante Nachricht MSG von strategischer Bedeutung erfordert beispielsweise mit hoher Wahrscheinlichkeit eine Änderung der aktuell vorgegebene Route RTE, zum Beispiel weil die aktuell vorgegebene Route RTE eine gesperrte Straße, einen gesperrten Grenzübergang oder eine anderweitig unpassierte Straße umfasst, zum Beispiel wegen Bauarbeiten, Überschwemmungen, Schnee oder Glatteis oder aufgrund eines schweren Unfalls.

In Figur 2 ist ein Verkehrshindernis BLCK in der aktuell vorgegebenen Route RTE markiert, über das durch eine entsprechende verkehrsrelevante Nachricht MSG informiert wird. Das Verkehrshindernis BLCK ist von strategischer Bedeutung, ist also zum Beispiel eine gesperrte Straße. Durch das Empfangen einer solchen verkehrsrelevanten Nachricht MSG wird die Navigationseinheit 3 veranlasst, eine alternative Route ARTE zu ermitteln und/oder den Fahrer des Fahrzeugs 1 über das Verkehrshindernis BLCK zu informieren. Die alternative Route AR-TE ist in Figur 2 als dicke, gestrichelte Linie dargestellt.

Vorzugsweise werden verkehrsrelevante Nachrichten MSG mit strategischer Bedeutung, die die aktuell vorgegebene Route RTE betreffen, unabhängig von ihrer Entfernung von der aktuellen Position POS des Fahrzeugs 1 in dem Nachrichtenspeicher MEM gespeichert. Dadurch kann frühzeitig die alternative Route ARTE ermittelt werden, so dass dadurch gegebenenfalls ein Umkehren und Zurückfahren nicht erforderlich ist.

Die vorgegebene Bedingung kann ferner umfassen, dass die jeweilige verkehrsrelevante Nachricht MSG ein vorgegebenes geographisches Gebiet GEO betreffen muss. Das vorgegebene geographische Gebiet GEO wird abhängig von der aktuellen Position POS des Fahrzeugs 1 vorgegeben. Das vorgegebene geographische Gebiet GEO ist beispielsweise ein rechteckiger, kreis- oder ellipsenförmiger, dreieckförmiger oder trapezförmiger Bereich in Fahrtrichtung vor und/oder um der aktuellen Position POS des Fahrzeugs 1. Das vorgegebene geographische Gebiet GEO bewegt sich somit mit dem Fahrzeug 1 entlang der Fahrstrecke. Das vorgegebene geographische Gebiet GEO ist insbesondere lokal oder regional begrenzt und muss insbesondere nicht das vorgegebene Ziel DEST umfassen.

Vorzugsweise wird das vorgegebene geographische Gebiet GEO, insbesondere bezüglich seiner Ausdehnung und/oder Form und/oder Ausrichtung, vorgegeben abhängig von der aktuellen Position und/oder einer Fahrtrichtung des Fahrzeugs und/oder der aktuell vorgegeben Route und/oder einer aktuellen Routenempfehlung und/oder alternativen Routen zu dem vorgegebenen Ziel, so dass alle Straßen, die für das Navigieren zu dem vorgegebenen Ziel relevant sind oder relevant werden können, von dem vorgegebenen geographischen Gebiet GEO erfasst sind. Zum Beispiel kann die Form des vorgegebenen geographischen Gebiets GEO unterschiedlich vorgegeben sein für eine aktuelle Position POS in einer Stadt und eine aktuelle Position POS außerhalb einer Stadt. Das vorgegebene geographische Gebiet GEO kann jedoch auch eine andere Form aufweisen oder anders ausgebildet oder vorgegeben sein. Beispielsweise kann das vorgegebene geographische Gebiet GEO auch eine ganze Stadt oder ein ganzes Land umfassen.

Die Ausdehnung des vorgegebenen geographischen Gebiets GEO ist abhängig von einer Anzahl N_MSG an verkehrsrelevanten Nachrichten MSG vorgegeben, die aktuell in dem Nachrichtenspeicher MEM gespeichert sind. Sind nur wenige Nachrichten MSG in dem Nachrichtenspeicher MEM gespeichert, dann kann das vorgegebene geographische Gebiet GEO groß sein und/oder eine große Anzahl von Straßen umfassen. Insbesondere können auch alle aktuell von dem Satelliten 4 und/oder der terrestrischen Sendeanlage 5 ausgesandten verkehrsrelevanten Nachrichten MSG in dem Nachrichtenspeicher MEM gespeichert werden, wenn deren Anzahl so gering ist, dass diese alle gleichzeitig in dem Nachrichtenspeicher MEM gespeichert sein können. Wird der Speicherplatz in dem Nachrichtenspeicher MEM jedoch knapp, dann wird das vorgegebene geographische Gebiet GEO vorzugsweise verkleinert. Verkehrsrelevante Nachrichten MSG, die außerhalb des verkleinerten vorgegebenen geographischen Gebiet GEO liegen, werden aus dem Nachrichtenspeicher MEM gelöscht oder der durch diese belegte Speicherplatz in dem Nachrichtenspeicher MEM wird für andere Nachrichten MSG freigegeben. Dies gilt jedoch vorzugsweise nicht für die verkehrsrelevanten Nachrichten MSG mit strategischer Bedeutung für das Navigieren NAV, die die aktuelle vorgegebene Route RTE betreffen.

Auf diese Weise kann ein zuverlässiges und sicheres Navigieren NAV des Fahrzeugs 1 zu dem vorgegebenen Ziel DEST erreicht werden. Ferner ist sichergestellt, dass alle verkehrsrelevanten Nachrichten MSG, die für das Navigieren NAV zu dem vorgegebenen Ziel DEST erforderlich sind, alle in dem Nachrichtenspeicher MEM gespeichert sein können und diese nicht durch andere, aktuell nicht relevante Nachrichten MSG verdrängt werden. Dies gilt insbesondere auch dann, wenn die Anzahl der insgesamt von dem Satelliten 4 und/oder von der terrestrischen Sendeanlage 5 gesendeten aktuellen verkehrsrelevanten Nachrichten MSG größer ist als die maximale Anzahl an verkehrsrelevanten Nachrichten MSG, die in dem Nachrichtenspeicher MEM speicherbar ist.

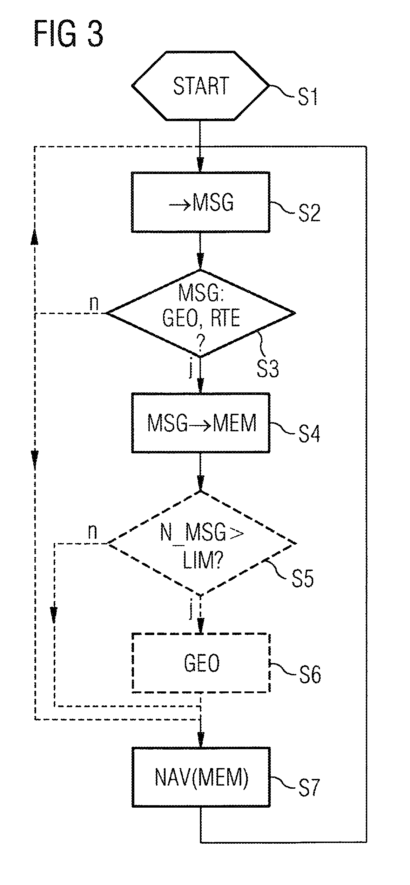

Figur 3 zeigt ein Ablaufdiagramm eines erfindungsgemäßen Programms zum Navigieren NAV des Fahrzeugs 1. Das Programm beginnt in einem Schritt S1. Der Schritt S1 wird beispielsweise ausgeführt bei einem Betriebsbeginn der Empfangseinheit 2 oder gegebenenfalls der Navigationseinheit 3. In einem Schritt S2 wird mindestens eine verkehrsrelevante Nachricht MSG empfangen. In einem Schritt S3 wird überprüft, ob die mindestens eine verkehrsrelevante Nachricht MSG die mindestens eine vorgegebene Bedingung erfüllt, also insbesondere die mindestens eine verkehrsrelevante Nachricht MSG das vorgegebene geographische Gebiet GEO betrifft und/oder die aktuell vorgegeben Route RTE betrifft. Ist diese Bedingung nicht erfüllt, dann wird das Programm in dem Schritt S2 fortgesetzt zum Empfangen der nächsten verkehrsrelevanten Nachricht MSG.

Ist die Bedingung in dem Schritt S3 jedoch erfüllt, dann wird in einem Schritt S4 die verkehrsrelevante Nachricht MSG in dem Nachrichtenspeicher MEM gespeichert. In einem Schritt S5 wird überprüft, ob die Anzahl N_MSG an verkehrsrelevanten Nachrichten MSG größer ist als ein vorgegebener Schwellenwert LIM. Ist diese Bedingung erfüllt, dann wird in einem Schritt S6 das vorgegebene geographische Gebiet GEO in seiner Ausdehnung verkleinert. Ferner ist vorgesehen, verkehrsrelevante Nachrichten MSG, die außerhalb des verkleinerten vorgegebenen geographischen Gebiets GEO liegen, aus dem Nachrichtenspeicher MEM zu löschen oder den von diesen belegten Speicher freizugeben.

Ferner ist vorgesehen, dass in dem Schritt S5 überprüft wird, ob die Anzahl N MSG an verkehrsrelevanten Nachrichten MSG, die in dem Nachrichtenspeicher MEM gespeichert sind, kleiner ist als ein weiterer Schwellenwert. Ist diese Bedingung erfüllt, dann kann in dem Schritt S6 ferner vorgesehen sein, das vorgegebene geographische Gebiet GEO zu vergrößern und verkehrsrelevante Nachrichten MSG, die das vergrößerte vorgegebene geographische Gebiet GEO betreffen, in dem Nachrichtenspeicher MEM zu speichern.

In einem Schritt S7 wird das Fahrzeug 1 abhängig von den verkehrsrelevanten Nachrichten MSG, die in dem Nachrichtenspeicher MEM gespeichert sind, navigiert. Ist die Bedingung in dem Schritt S5 nicht erfüllt, dann wird das Verfahren direkt in dem Schritt S7 fortgesetzt. Ferner kann auch vorgesehen sein, das Verfahren direkt in dem Schritt S7 fortzusetzen, wenn die mindestens eine vorgegebene Bedingung in dem Schritt S3 nicht erfüllt ist, das heißt zum Beispiel die verkehrsrelevante Nachricht MSG nicht das vorgegebene geographische Gebiet GEO und nicht die aktuell vorgegebene Route RTE betrifft. Vorzugsweise erfolgt das Navigieren NAV in dem Schritt S7 quasi parallel zu dem Empfangen, überprüfen, Speichern oder Verwerfen oder sonstigen Verarbeiten der verkehrsrelevanten Nachrichten MSG in den Schritten S2 bis S6.

Der Schritt S7 zum Navigieren NAV des Fahrzeugs 1 umfasst beispielsweise das Geben von optischen oder akustischen Fahranweisungen an den Fahrer des Fahrzeugs 1, um das Fahrzeug 1 zu dem vorgegebenen Ziel DEST zu führen. Das Navigieren NAV in dem Schritt S7 kann ferner umfassen, die aktuelle vorgegebene Route RTE abhängig von den verkehrsrelevanten Nachrichten MSG, die in dem Nachrichtenspeicher MEM gespeichert sind, anzupassen oder die alternative Route ARTE zu ermitteln oder den Fahrer über mögliche Verkehrhindernisse BLCK zu informieren, Änderungen der aktuell vorgegebenen Route oder die alternative Route ARTE oder weitere alternative Routen vorzuschlagen. Gegebenenfalls kann vorgesehen sein, den Fahrer aus den Vorschlägen wählen zu lassen.

## Patentansprüche

1. Verfahren zum Verwenden von verkehrsrelevanten Nachrichten in einer Fahrzeugnavigation, bei dem
- mindestens eine verkehrsrelevante Nachricht (MSG) empfangen wird,
- die mindestens eine verkehrsrelevante Nachricht (MSG) überprüft wird, ob diese mindestens eine vorgegebene Bedingung erfüllt,
- die mindestens eine vorgegebene Bedingung erfüllt ist, wenn die jeweilige verkehrsrelevante Nachricht (MSG) ein vorgegebenes geographisches Gebiet (GEO) betrifft, das abhängig von einer aktuellen Position (POS) des Fahrzeugs (1) vorgegeben ist, und/oder eine aktuell vorgegebene Route (RTE) betrifft,
- die jeweilige verkehrsrelevante Nachricht (MSG) nur dann in einem Nachrichtenspeicher (MEM) gespeichert wird, wenn für diese die mindestens eine vorgegebene Bedingung erfüllt ist, und die jeweilige verkehrsrelevante Nachricht (MSG) andernfalls verworfen wird und
- die in dem Nachrichtenspeicher (MEM) gespeicherten verkehrsrelevanten Nachrichten (MSG) für die Fahrzeugnavigation verwendet werden, **dadurch gekennzeichnet, daß** weiterhin eine Ausdehnung des vorgegebenen geographischen Gebiets (GEO) vorgegeben wird abhängig von einer Anzahl (N_MSG) an verkehrsrelevanten Nachrichten (MSG), die in dem Nachrichtenspeicher (MEM) gespeichert sind, und
- die Ausdehnung des vorgegebenen geographischen Gebiets (GEO) verkleinert wird, wenn die Anzahl (N_MSG) an verkehrsrelevanten Nachrichten (MSG), die in dem Nachrichtenspeicher (MEM) gespeichert sind, einen vorgegebenen Schwellenwert (LIM) überschreitet und
- abgespeicherte verkehrsrelevante Nachrichten (MSG), die ein geographisches Gebiet außerhalb des vorgegebenen geographischen Gebiets (GEO) betreffen, aus dem Nachrichtenspeicher (MEM) gelöscht werden oder der durch diese belegte Speicherplatz in dem Nachrichtenspeicher (MEM) für andere Nachrichten freigegeben wird.

2. Verfahren nach Anspruch 1, bei dem verkehrsrelevante Nachrichten (MSG), die die aktuell vorgegebene Route (RTE) betreffen, in dem Nachrichtenspeicher (MEM) gespeichert werden und/oder bleiben, wenn diese Straßensperren, gesperrte Grenzübergänge, sowie unpassierbare Straßen aufgrund von Bauarbeiten, Überschwemmungen, Schnee, Glatteis oder eines schweren Unfalls betreffen.

3. Vorrichtung zum Navigieren (NAV) eines Fahrzeugs (1), die ausgebildet ist
- zum Empfangen mindestens einer verkehrsrelevanten Nachricht (MSG),
- zum Überprüfen der mindestens einen verkehrsrelevanten Nachricht (MSG), ob diese mindestens eine vorgegebene Bedingung erfüllt, und die mindestens eine vorgegebene Bedingung erfüllt ist, wenn die jeweilige verkehrsrelevante Nachricht (MSG) ein vorgegebenes geographisches Gebiet (GEO) betrifft, das abhängig von einer aktuellen Position (POS) des Fahrzeugs (1) vorgegeben ist, und/oder eine aktuell vorgegebene Route (RTE) betrifft,
- zum Speichern der jeweiligen verkehrsrelevanten Nachricht (MSG) in einem Nachrichtenspeicher (MEM) nur dann, wenn für diese die mindestens eine vorgegebene Bedingung erfüllt ist, und zum andernfalls Verwerfen der jeweiligen verkehrsrelevanten Nachricht (MSG) und
- zum Bestimmen einer Route abhängig von den verkehrsrelevanten Nachrichten (MSG), die in dem Nachrichtenspeicher (MEM) gespeichert sind, daduch gekennzeichnet, daß die Vorrichtung weiterhin ausgebildet ist, eine Ausdehnung des vorgegebenen geographischen Gebiets (GEO) abhängig von einer Anzahl (N_MSG) an verkehrsrelevanten Nachrichten, die in dem Nachrichtenspeicher gespeichert sind, vorzugeben,
- zum Verkleinern des vorgegebenen geographischen Gebiets (GEO), wenn die Anzahl (N_MSG) an verkehrsrelevanten Nachrichten (MSG), die in dem Nachrichtenspeicher (MEM) gespeichert sind, einen vorgegebenen Schwellenwert (LIM) überschreitet,
- zum Löschen oder zum Freigeben von Speicherplatz, der von abgespeicherten verkehrsrelevanten Nachrichten (MSG) belegt ist, die ein geographisches Gebiet außerhalb des vorgegebenen geographischen Gebiets (GEO) betreffen, aus dem bzw. in dem Nachrichtenspeicher (MEM) für andere Nachrichten.

## Claims

1. Method for using traffic-related messages in a vehicle navigation system, in which method
- at least one traffic-related message (MSG) is received,
- the at least one traffic-related message (MSG) is checked to determine whether it meets at least one predefined condition,
- the at least one predefined condition is met if the respective traffic-related message (MSG) relates to a predefined geographic region (GEO) which is predefined as a function of a current position (POS) of the vehicle (1), and/or relates to a currently predefined route (RTE),
- the respective traffic-related message (MSG) is stored in a message memory (MEM) only when said message (MSG) meets the at least one predefined condition, and the respective traffic-related message (MSG) is otherwise rejected, and
- the traffic-related messages (MSG) which are stored in the message memory (MEM) are used for the vehicle navigation, **characterized in that** an extension of the predefined geographic region (GEO) is also predefined as a function of a number (N_MSG) of traffic-related messages (MSG) which are stored in the message memory (MEM),
and
- the extension of the predefined geographic region (GEO) is made smaller if the number (N_MSG) of traffic-related messages (MSG) which are stored in the message memory (MEM) exceeds a predefined threshold value (LIM), and
- stored traffic-related messages (MSG) which relate to a geographic region outside the predefined geographic region (GEO) are deleted from the message memory (MEM) or released for other messages by this occupied memory space in the message memory (MEM).

2. Method according to Claim 1, in which traffic-related messages (MSG) which relate to the currently predefined route (RTE) are stored and/or remain in the message memory (MEM) if these relate to road blocks, blocked border crossings as well as roads which are impassable owing to road works, flooding, snow, black ice or a serious accident.

3. Device for navigating (NAV) a vehicle (1) which is designed
- to receive at least one traffic-related message (MSG),
- to check the at least one traffic-related message (MSG) as to whether it meets at least one predefined condition and the at least one predefined condition is met if the respective traffic-related message (MSG) relates to a predefined geographic region (GEO) which is predefined as a function of a current position (POS) of the vehicle (1) and/or relates to a currently predefined route (RTE),
- to store the respective traffic-related message (MSG) in a message memory (MEM) only when the at least one predefined condition is met for said message (MSG) and, on the other hand, to reject the respective traffic-related message (MSG), and
- to determine a route as a function of the traffic-related messages (MSG) which are stored in the message memory (MEM), **characterized in that** the device is also designed to predefine an extension of the predefined geographic region (GEO) as a function of a number (N_MSG) of traffic-related messages which are stored in the message memory,
- to make the predefined geographic region (GEO) smaller if the number (N_MSG) of traffic-related messages (MSG) which are stored in the message memory (MEM) exceeds a predefined threshold value (LIM),
- to delete or to release memory space which is occupied by stored traffic-related messages (MSG) which relate to a geographic region outside the predefined geographic region (GEO), from or in the message memory (MEM) for other messages.

## Revendications

1. Procédé d'utilisation de messages de circulation dans une navigation de véhicule, dans lequel
- on reçoit au moins un message (MSG) de circulation,
- on contrôle le au moins un message (MSG) de circulation sur le point de savoir si au moins une condition prescrite est satisfaite,
- la au moins une condition prescrite est satisfaite si le message (MSG) de circulation respectif concerne une région (GEO) géographique prescrite, qui est prescrite en fonction d'une position (POS) présente du véhicule (1) et/ou concerne un itinéraire (RTE) prescrit présentement,
- on ne mémorise le message (MSG) de circulation respectif dans une mémoire (MEM) de message que si pour celui-ci la au moins une condition prescrite est satisfaite et sinon on rejette le message (MSG) de circulation respectif et
- on utilise les messages (MSG) de circulation mémorisés dans la mémoire (MEM) de message pour la navigation du véhicule, **caractérisé en ce qu'**en outre on prescrit une extension de la région (GEO) géographique prescrite en fonction du nombre (N_MSG) de messages (MSG) de circulation, qui sont mémorisés dans la mémoire (MEM) de message,
- on rapetisse l'étendue de la région (GEO) géographique prescrite si le nombre (N_MSG) de messages (MSG) de circulation qui sont mémorisés dans la mémoire (MEM) de message dépasse une valeur (LIM) de seuil prescrite et
- on efface de la mémoire (MEM) de message des messages (MSG) de circulation mémorisés, qui concernent une région géographique à l'extérieur de la région (GEO) géographique prescrite, ou on libère l'emplacement de mémoire qu'ils occupent dans la mémoire (MEM) de message pour d'autres messages.

2. Procédé suivant la revendication 1, dans lequel on mémorise et/ou on laisse dans la mémoire (MEM) de message, des messages (MSG) de circulation qui concerne l'itinéraire (RTE) prescrit présentement si ceux-ci concernent des rues barrées, des passages de frontières barrées ainsi que des rues dans lesquelles on ne peut pas passer en raison de travaux d'inondation, de neige, de verglas ou d'un accident grave.

3. Dispositif de navigation (NAV) d'un véhicule (1) qui est constitué
- pour recevoir au moins un message (MSG) de circulation,
- pour contrôler le au moins un message (MSG) de circulation sur le point de savoir s'il satisfait au moins une condition prescrite et la au moins une condition prescrite est satisfaite si le message (MSG) de circulation respectif concerne une région (GEO) géographique prescrite, qui est prescrite en fonction d'une position (POS) présente du véhicule (1) et/ou concerne un itinéraire (RTE) prescrit présentement,
- pour ne recevoir le message (MSG) de circulation respectif dans une mémoire (MEM) de message que si pour celui-ci la au moins une condition prescrite est satisfaite et sinon pour rejeter le message (MSG) de circulation respectif et
- pour déterminer un itinéraire en fonction des messages (MSG) de circulation, qui sont mémorisés dans la mémoire (MEM) de message, **caractérisé en ce que** le dispositif est constitué en outre pour prescrire une expansion de la région (GEO) géographique prescrite en fonction d'un nombre (N_MSG) de messages de circulation, qui sont mémorisés dans la mémoire de message,
- pour rapetisser la région (GEO) géographique prescrite si le nombre (N_MSG) de messages (MSG) de circulation, qui sont mémorisés dans la mémoire (MEM) de message, dépasse une valeur (LIM) de seuil prescrite,
- pour, au profit d'autres messages, effacer de la mémoire (MEM) de message ou pour libérer un emplacement de mémoire, qui est occupé par des messages (MSG) de circulation mémorisés, qui concernent une région géographique à l'extérieur de la région (GEO) géographique prescrite.
